(19) 

**Europäisches Patentamt**
**European Patent Office**
**Office européen des brevets**

(11) **EP 3 196 971 A1**

(12) **EUROPEAN PATENT APPLICATION**

(43) Date of publication:
**26.07.2017 Bulletin 2017/30**

(51) Int Cl.:
**H01M 10/44** (2006.01)   **H01M 10/48** (2006.01)
**H01M 10/052** (2010.01)   **H01M 10/0525** (2010.01)

(21) Application number: **17151855.8**

(22) Date of filing: **17.01.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.01.2016  CN 201610034122**

(71) Applicant: **NingDe Amperex Technology Limited 352100 Ningde City Fujian (CN)**

(72) Inventors:
• **Geng, Jibin**
  **Ningde City, Fujian 352100 (CN)**
• **Fu, Chenghua**
  **Ningde City, Fujian 352100 (CN)**

(74) Representative: **Petraz, Gilberto Luigi et al**
  **GLP S.r.l.**
  **Viale Europa Unita, 171**
  **33100 Udine (IT)**

(54) **BATTERY CONTROLLING APPARATUS AND METHOD FOR CONTROLLING BATTERY**

(57) The present application relates to a battery controlling apparatus and a method for controlling a battery, the battery controlling apparatus includes a temperature sensor, a voltage sensor and a controller, the voltage sensor is connected with the battery, an output end of the voltage sensor is connected with the controller, an input end of the temperature sensor is connected with the battery and an output end of the temperature sensor is connected with the controller; the voltage sensor transfers an acquired voltage of the battery to the controller, the temperature sensor transfers an acquired present temperature of the battery to the controller, the controller controls the battery to be in a charging state or a discharging state according to the acquired present temperature of the battery and a relationship between a preset cut-off voltage corresponding to the present temperature of the battery and the voltage of the battery. The method of controlling a battery with the battery controlling apparatus includes: receiving, by the controller, a voltage and a present temperature of the battery; and controlling the battery to be in a charging state or a discharging state. Both the battery controlling apparatus and the method for controlling the battery improve high-temperature cycle performance, safety performance and low-temperature charge performance of the battery.

FIG. 1

**Description**

**TECHNICAL FIELD**

The present application relates to the field of lithium battery technologies and, particularly, relates to a battery controlling apparatus and a method for controlling a battery.

**BACKGROUND**

In the rapid developing information era, with the increasing demands on mobile phones, laptops, cameras and other electronic products, the battery has been more and more widely applied for its advantages such as high voltage, high specific energy, long cycle life and good safety performance. In addition, the Li-ion battery has also been developed rapidly in the fields like electric vehicles, hybrid vehicles, energy storage equipment, etc.

The application conditions of the Li-ion battery are more and more severe, and in the meantime the requirements on safety performance and service life of the Li-ion battery are also continuously increasing. Therefore, it is an urgent need for people to solve the problems like how to improve the cycle performance of the Li-ion battery in extreme conditions such as high temperature and low temperature, and how to solve the temperature rise problem that may affect cycle performance and safety performance of the Li-ion battery in the fast charging process.

**SUMMARY**

In order to solve the above-mentioned problems, the present application provides a battery controlling apparatus which can control the charging and discharging behaviors of the Li-ion battery according to a present temperature and a voltage of the battery that are detected and acquired.

The purpose of the present application is to provide a battery controlling apparatus, including a temperature sensor, a voltage sensor and a controller, the voltage sensor is connected with the battery, an output end of the voltage sensor is connected with the controller, an input end of the temperature sensor is connected with the battery and an output end of the temperature sensor is connected with the controller; the voltage sensor is configured to transfer an acquired voltage of the battery to the controller, the temperature sensor is configured to transfer an acquired present temperature of the battery to the controller, the controller is configured to control the battery to be in a charging state or a discharging state according to the acquired present temperature of the battery and a relationship between a preset cut-off voltage corresponding to the present temperature of the battery and the voltage of the battery.

Another purpose of the present application is to provide a method for controlling a battery, the battery includes a temperature sensor, a voltage sensor and a controller, the voltage sensor is connected with the battery, an output end of the voltage sensor is connected with the controller, an input end of the temperature sensor is connected with the battery and an output end of the temperature sensor is connected with the controller; the method includes: receiving, by the controller, a voltage of the battery transferred by the voltage sensor and a present temperature of the battery transferred by the temperature sensor; controlling, by the controller, the battery to be in a charging state, a discharging state or a standby state according to an acquired present temperature of the battery and a relationship between a preset cut-off voltage corresponding to the present temperature of the battery and an acquired voltage of the battery.

The battery controlling apparatus provided by the present application can control charging or discharging behaviors of a Li-ion battery according to a present temperature and a voltage of the battery that are detected and acquired, so as to improve safety performance of the battery.

The method provided by the present application, similarly, can control charging or discharging behaviors of a Li-ion battery according to a present temperature and a voltage of the battery that are detected and acquired, so as to improve the safety performance of the battery.

**BRIEF DESCRIPTION OF DRAWINGS**

FIG. 1 is a schematic diagram of an integral structure of a battery controlling apparatus provided by a first embodiment of the present application;

FIG. 2 is a structural diagram of a controller of a battery controlling apparatus provided by the first embodiment of the present application;

FIG. 3 is a flow diagram of a method for controlling a battery provided by a second embodiment of the present application;

FIG. 4 is a flow diagram of implementation of a method for controlling a battery provided by a third embodiment of the present application;

FIG. 5 is a diagram of a relationship between a temperature and a preset cut-off voltage of Li-ion battery 1a;
FIG. 6 is a diagram of a relationship between a temperature and a preset cut-off voltage of Li-ion battery 1b;
FIG. 7 is a diagram of a relationship between a temperature and a preset cut-off voltage of Li-ion battery 1c.
FIG. 8 is a diagram of a relationship between a temperature and a preset cut-off voltage of Li-ion battery 1d;
FIG. 9 is a diagram of a relationship between a temperature and a preset cut-off voltage of Li-ion battery 1e;
FIG. 10 is a diagram of a relationship between a temperature and a preset cut-off voltage of Li-ion battery If.

**DESCRIPTION OF EMBODIMENTS**

The characteristics and advantages of the present application will become more clear and definite with reference to the following detailed description of the present application.

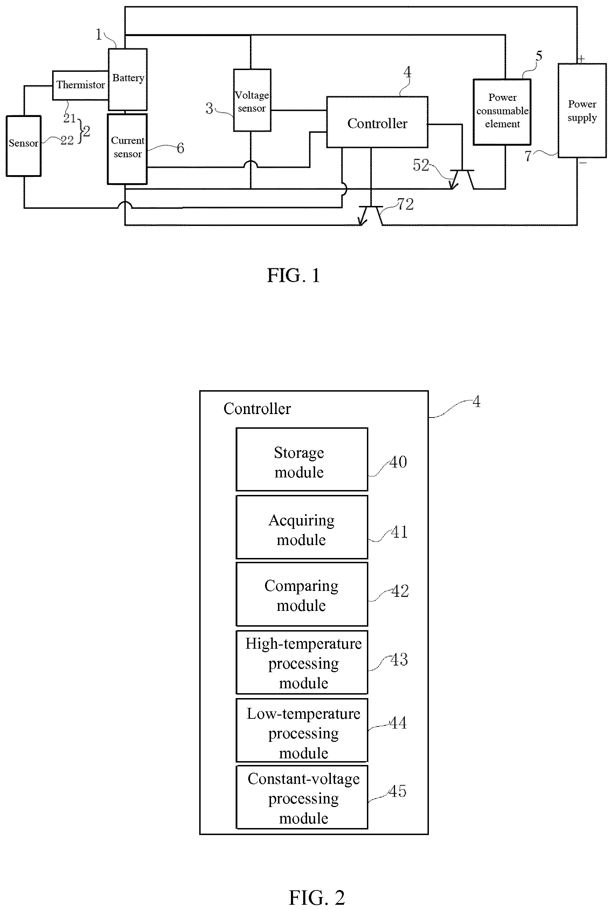

A first embodiment of the present application provides a battery controlling apparatus, as shown in FIG. 1, including a battery 1, a temperature sensor 2, a voltage sensor 3 and a controller 4, and further including a power consumable element 5 and a current sensor 6.

In the above-mentioned embodiment, the voltage sensor 3 is connected with the battery 1, the output end of the voltage sensor 3 is connected with the controller 4, the input end of the temperature sensor 2 is connected with the battery 1, and the output end of the temperature sensor 2 is connected with the controller 4; the voltage sensor 3 is configured to transfer an acquired voltage of the battery 1 to the controller 4, the temperature sensor 2 is configured to transfer an acquired present temperature of the battery 1 to the controller 4, the controller 4 is configured to control the battery 1 to be in a charging state or a discharging state according to the acquired present temperature of the battery 1 and a relationship between a preset cut-off voltage corresponding to the present temperature of the battery 1 and the voltage of the battery 1.

In order to quickly and conveniently detect the present temperature of the battery 1, preferably, a thermistor 21 and a sensor 22 for sensing the temperature of the thermistor 21 are used as the temperature sensor 2, specifically, the negative temperature coefficient (Negative Temperature Coefficient, NTC) thermistor can be selected. In order to accurately detect and acquire the present temperature of the battery 1, the thermistor 21 is attached on the battery 1, the thermistor 21 is connected with the input end of the sensor 22, and the output end of the sensor 22 is connected with the controller 4. In actual application, a microcontroller can be selected as the controller 4.

In the battery controlling apparatus, a power consumable element 5 is further provided, the power consumable element 5 is connected with the battery 1 through the controller 4, if the present temperature of the battery 1 detected and acquired by the temperature sensor 2 is greater than first preset temperature which can be 25°C, meanwhile an upper limit value of the first preset temperature is set as second preset temperature which can be 200°C, the present temperature is greater than 25°C and less than or equal to 200°C, and in the meantime the voltage of the battery 1 detected and acquired by the voltage sensor 3 is greater than the preset cut-off voltage corresponding to the present temperature of the battery 1, the power consumable element 5 consumes the electric energy of the battery 1 under the control of the controller 4, that is to say, the battery 1 discharges to the power consumable element 5 and converts the electric energy into another form of energy like heat energy until the voltage of the battery 1 is equal to the preset cut-off voltage corresponding to the present temperature of the battery 1, so as to guarantee the safety performance of the battery 1 at a high temperature, for example possessing better stability at a high temperature of 150°C. Additionally, the battery 1 is in a standby state, when the outer temperature is high and the voltage of the battery 1 is greater than the preset cut-off voltage corresponding to the present temperature of the battery 1, the battery 1 will release the electric energy under the controller 4 and the power consumable element 5, so as to guarantee the safety performance of the battery in the standby state. Moreover, the cycle performance and the storage performance of the battery at a high temperature are also improved, for example, the cycle performance at 45°C and the storage performance at 45°C of the battery are improved. It should be noted that: the standby state is a state waiting to be charged or discharge.

In the present application, the battery 1 has a wide variety of types and, especially, is a secondary battery such as the lithium secondary battery and, further specifically, is a Li-ion battery.

Besides, a first switch 52 can be further provided between the controller 4 and the power consumable element 5, the controller 4 controls the switching-on or switching-off of the first switch 52, so as to better control the power consumable element 5 to consume or stop consuming the electric energy of the battery 1. The type of the power consumable element 5 can be selected as desired, as long as the electric energy of the battery 1 can be consumed. However, from the perspective of feasibility and economy, the power consumable element 5 is preferred to be a resistor.

It should be noted that, in the present application, the preset capacity of the battery 1 at a certain temperature is measured through a preset cut-off voltage at the same temperature, that is to say, the preset cut-off voltage corresponding to a certain temperature can indicate that the battery 1 reaches a preset capacity at that temperature. However, it should be noted that, when the battery 1 is in a charging state, if a high current is selected to charge the battery 1 and the battery 1 reaches the preset cut-off voltage corresponding to the temperature, the capacity of the battery 1 at this time does not reach the preset capacity corresponding to the temperature, thus the battery still needs to be charged with a low current until the battery 1 reaches a preset cut-off current, which then indicates that the battery 1 reaches the preset capacity. Additionally, the mentioned preset capacity herein refers to the maximum capacity that the battery 1 can possess when the safety performance of the battery 1 is not affected at a certain present temperature.

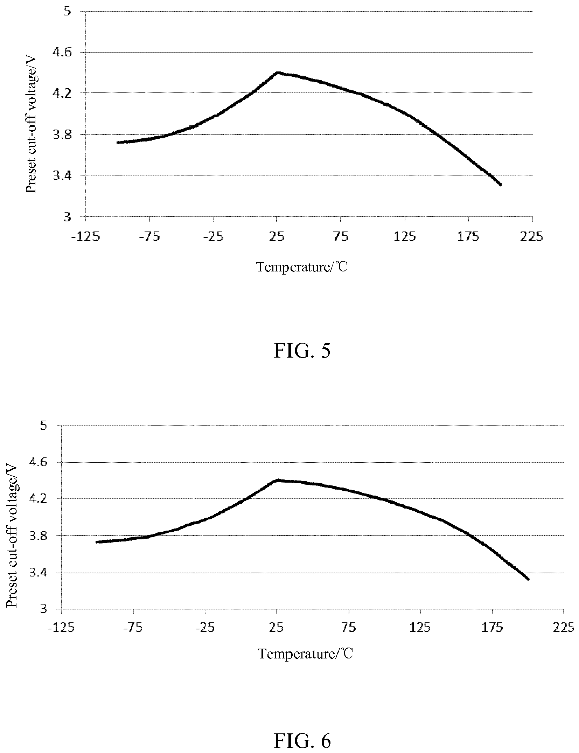

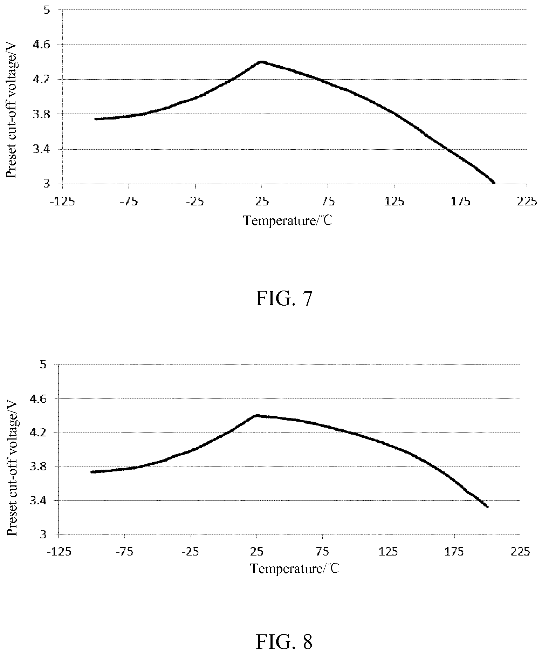

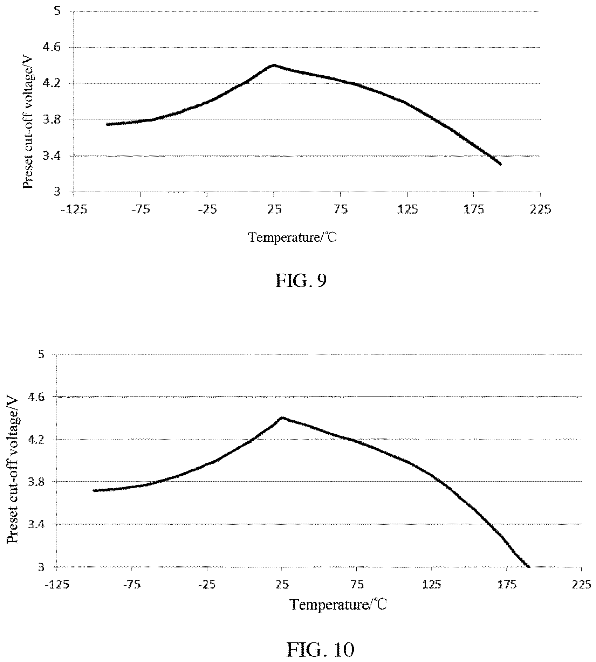

The preset cut-off voltage of the battery 1 is different corresponding to different temperature, the batteries of different positive or negative electrode active materials respectively have different corresponding relationships between the temperature and the preset cut-off voltage, and the negative electrode active materials can be graphite or silicon or a combination thereof, e.g. the graphite doped silicon system in which the weight ratio of graphite and silicon is graphite: silicon=9:1 or 8:2, the positive electrode active material can be lithium transition metal oxide, e.g. lithium cobaltite dioxide $(LiCoO_2)$, lithium manganate $(LiMn_2O_4)$ and lithium nickel cobalt manganate ternary material like $LiNi_{0.5}Co_{0.2}Mn_{0.3}O_2$ and $LiNi_{0.6}Co_{0.2}Mn_{0.2}$. The corresponding relationships between the temperature and the preset cut-off voltage of the Li-ion battery of $LiCoO_2$ and graphite system (hereinafter referred to as Battery 1a), Li-ion battery of $LiNi_{0.5}Co_{0.2}Mn_{0.3}O_2$ and graphite system (hereinafter referred to as Battery 1b), Li-ion battery of $LiMn_2O_4$ and graphite system (hereinafter referred to as Battery 1c), Li-ion battery of $LiNi_{0.6}Co_{0.2}Mn_{0.2}O_2$ and graphite system (hereinafter referred to as Battery 1d), Li-ion battery of $LiCoO_2$ and graphite doped silicon system (a weight ratio of graphite and silicon is graphite: silicon=9:1, hereinafter referred to as Battery 1e) and Li-ion battery of $LiNi_{0.6}Co_{0.2}Mn_{0.2}O_2$ and graphite doped silicon system (a weight ratio of graphite and silicon is graphite: silicon=8:2, hereinafter referred to as Battery If) are sequentially shown in FIG. 5, FIG. 6, FIG. 7, FIG. 8, FIG. 9 and FIG. 10. In the present application, the corresponding relationship between the temperature and the preset cut-off voltage of the Li-ion battery of each above-mentioned system is acquired by the following manner: placing the battery under a series of different temperatures and, at each temperature, charging the battery to a certain voltage, and then testing the safety performance and the charge performance of the battery at the voltage according to the manner provided in the safety requirements of the Li-ion battery or battery module used for portable electronic products of GB 31241-2014, if the battery reaches the safety performance and charge performance specified in the GB 31241-2014 standard at the voltage, the voltage at this time is the preset cut-off voltage corresponding to the temperature of the battery, such that the corresponding relationship between the temperature and the preset cut-off voltage is obtained.

In order to effectively and quickly adjust the voltage of the battery 1, a second switch 72 is provided between a power supply 7 and the controller 4, the controller 4 controls the switching-on or switching-off of the second switch 72, so as to make the battery 1 be charged or stop being charged. The power supply 7 can be selected according to specific application situation, as long as it can provide charging electric energy for the battery 1.

When the battery 1 is in a charging state, in order to make the battery 1 reach the preset capacity at the present temperature, a current sensor 6 can be provided, the current sensor 6 is connected with the battery 1, the output end of the current sensor 6 is connected with the controller 4, the current sensor 6 is configured to detect and acquire the current of the battery 1 when the battery 1 reaches the preset cut-off voltage corresponding to the present temperature in the charging state; if the detected and acquired current is greater than the preset cut-off current, under the control of the controller 4, the power supply 7 will charge the battery 1 with a constant voltage of the reached preset cut-off voltage until the current of the battery 1 is less than or equal to the preset cut-off current, that is to say, to cut off the second switch 72, such that the power supply 7 stops charging the battery 1.

As shown in FIG. 2, the controller 4 includes a storage module 40, an acquiring module 41, a comparing module 42 and a high-temperature processing module 43.

The storage module 40 is configured to store the corresponding relationship graphs between the temperature and the preset cut-off voltage of the battery 1, and is also configured to store the preset charging current with which the battery 1 is charged, the preset discharging current with which the battery 1 discharges to the power consumable element 5 and the preset cut-off current and, additionally, is also configured to store the first preset temperature and its upper limit value and lower limit value, it should be noted that, the lower limit value of the first preset temperature is recorded as a third preset temperature which can be -100°C.

The acquiring module 41 is configured to acquire the present temperature of the battery 1 transferred by the temperature sensor 2, the voltage of the battery 1 transferred by the voltage sensor 3 and the current of the battery 1 transferred by the current sensor 6.

The comparing module 42 is configured to compare the present temperature of the battery 1 with the first preset temperature, and compare the preset cut-off voltage corresponding to the present temperature with the voltage of the battery 1. The high temperature mentioned herein refers to a temperature that is greater than the first preset temperature and less than or equal to the second preset temperature, the low temperature refers to a temperature that is greater than or equal to the third preset temperature and less than or equal to the first preset temperature.

The high-temperature processing module 43 is configured to control the battery 1 to discharge to the power consumable element 5 if the present temperature of the battery 1 is greater than the first preset temperature and, specifically, the present temperature of the battery 1 is greater than the first preset temperature and less than or equal to the second preset temperature, and the voltage of the battery 1 is greater than the preset cut-off voltage corresponding to the present temperature; specifically, under the control of the controller 4, the second switch 72 is switched off, the first switch 52 is switched on, so that the power consumable element 5 consumes the electric energy of the battery 1, i.e. the battery 1 discharges to the power consumable element 5; if the present temperature of the battery 1 is greater than the first preset temperature and the voltage of the battery 1 is less than the preset cut-off voltage corresponding to the present temperature, the high-temperature processing module 43 is configured to control the power supply 7 to charge the battery 1 and, preferably, the power supply 7 charges the battery 1 with the preset charging current until the voltage of the battery 1 is equal to the preset cut-off voltage; specifically, under the control of the controller 4, the second switch 72 is switched on, the first switch 52 is switched off, so that the power supply 7 charges the battery 1.

As shown in FIG. 2, the controller 4 includes a storage module 40, an acquiring module 41, a comparing module 42 and a low-temperature processing module 44, in which the storage module 40, the acquiring module 41 and the comparing module 42 are described as above, which will not be repeated herein.

The low-temperature processing module 44 is configured to control the battery 1 to be in a standby state if the present temperature of the battery 1 is less than or equal to the first preset temperature and, preferably, greater than or equal to the third preset temperature and less than or equal to the first preset temperature, and the voltage of the battery 1 is greater than or equal to the preset cut-off voltage corresponding to the present temperature; specifically, under the control of the controller 4 at this time, the first switch 52 and the second switch 72 are all switched off; if the present temperature of the battery 1 is greater than or equal to the third preset temperature and less than or equal to the first preset temperature and the voltage of the battery 1 is less than the preset cut-off voltage corresponding to the present temperature, the low-temperature processing module 44 is configured to control the power supply 7 to charge the battery 1, that is to say, to switch on the second switch 72 and switch off the first switch 52, so that the power supply 7 charges the battery 1 until the voltage of the battery 1 is equal to the preset cut-off voltage corresponding to the present temperature. The configuration of the low-temperature processing module 44 greatly reduces the occurrence of lithium precipitation phenomenon, and improves the cycle performance and safety performance of the Li-ion battery.

When the battery 1 is in a charging state and, especially when the battery 1 is charged with high current, in order to make the battery 1 reach the preset capacity corresponding to the present temperature, a constant-voltage processing module 45 is provided, the constant-voltage processing module 45 is configured to detect and acquire the current of the battery 1 and determine whether it is needed to continue charging the battery 1 or not when the battery 1 is charged to the preset cut-off voltage corresponding to the present temperature. If the detected and acquired current is greater than the preset cut-off current, the constant-voltage processing module 45 is configured to control the power supply 7 to charge the battery 1 with a constant voltage and, preferably, the battery 1 is charged with the preset cut-off voltage corresponding to the present temperature; if the detected and acquired current is less than or equal to the preset cut-off current, the constant-voltage processing module 45 is configured to control the power supply 7 to stop charging the battery 1 and make the battery 1 be in a standby state. That is to say, no matter the battery 1 is charged under the control of the high-temperature processing module 43 or the low-temperature processing module 44, the constant-voltage processing module 45 is configured to detect and acquire the current of the battery 1 and determine whether it is needed to continue charging the battery 1 or not when the battery 1 is charged to preset cut-off voltage corresponding to the present temperature.

The battery controlling apparatus provided by the present application can control charging and discharging behaviors of the Li-ion battery according to the present temperature and voltage of the battery that are detected and acquired, so as to improve the safety performance of the battery. Particularly, the safety performance of the battery at the high temperature is improved, that is, to perform discharging to the battery in a standby state under the control of the battery controlling apparatus, and in the meantime guarantee the safety performance when the battery is charged at the high temperature and, additionally, improve the cycle performance of the battery and the storage performance at the high temperature; besides, the battery controlling apparatus provided by the present application also greatly reduces the occurrence of lithium precipitation phenomenon of the battery at the low temperature, so as to further improve the safety performance and the cycle performance of the Li-ion battery. Particularly, the battery controlling apparatus provided by the present application improves the safety performance of the battery when the battery is charged with a high rate, so as to avoid burning or explosion of the battery caused by high rate charging.

A second embodiment of the present application provides a method for controlling a battery, the battery includes a temperature sensor, a voltage sensor and a controller, the voltage sensor is connected with the battery, and the output end of the voltage sensor is connected with the controller, the input end of the temperature sensor is connected with the battery, and the output end of the temperature sensor is connected with the controller.

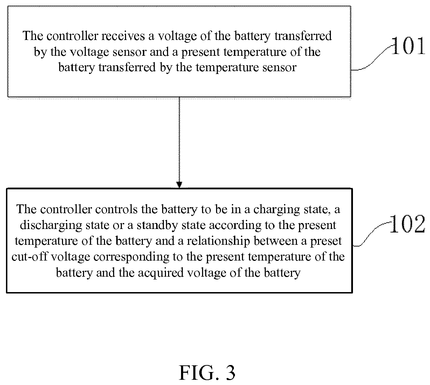

In the above-mentioned second embodiment, as shown in FIG. 3, the method for controlling the battery includes:

101: acquiring information of a battery: the controller receives a voltage of the battery transferred by the voltage sensor and a present temperature of the battery transferred by the temperature sensor. The temperature sensor transfers the detected and acquired present temperature signal of the battery to the controller and the voltage sensor transfers the detected and acquired voltage signal of the battery to the controller.

Further specifically, when a thermistor and a sensor used for sensing the temperature of the thermistor are selected as the temperature sensor, the thermistor is attached on the battery and connected with the input end of the sensor, and the output end of the sensor is connected with the controller, the controller receives the present temperature of the battery obtained through sensing the thermistor by the sensor.

102: adjusting the state of the battery: the controller controls the battery to be in a charging state, a discharging state or a standby state according to the acquired present temperature of the battery and a relationship between a preset cut-off voltage corresponding to the present temperature of the battery and the acquired voltage of the battery.

The relationship between the present temperature of the battery and the first preset temperature and the relationship between the preset cut-off voltage corresponding to the present temperature of the battery and the acquired voltage of the battery determine the battery to be in a charging state, a discharging state or a standby state.

Thus, it can be known that, the method for controlling the battery provided by the present application, i.e. the method for controlling the battery by the battery controlling apparatus provided by the present application can control charging and discharging behaviors of the Li-ion battery according to the detected and acquired present temperature and voltage of the battery, so as to improve the safety performance of the battery and, particularly, guarantee the safety performance of the battery at the high temperature, that is, to perform discharging to the battery in a standby state under the control of the battery controlling apparatus, and in the meantime guarantee the safety performance when the battery is charged at the high temperature and, additionally, improve the cycle performance of the battery and the storage performance at the high temperature; besides, the method for controlling the battery with the battery controlling apparatus provided by the present application also greatly reduces the occurrence of lithium precipitation phenomenon of the battery under the low temperature, so as to further improve the safety performance and the cycle performance of the battery. Particularly, the occurrence of lithium precipitation phenomenon of the battery is reduced when the battery is charged with a high rate, so as to guarantee the safety performance of the battery and avoid burning or explosion of the battery caused by high rate charging.

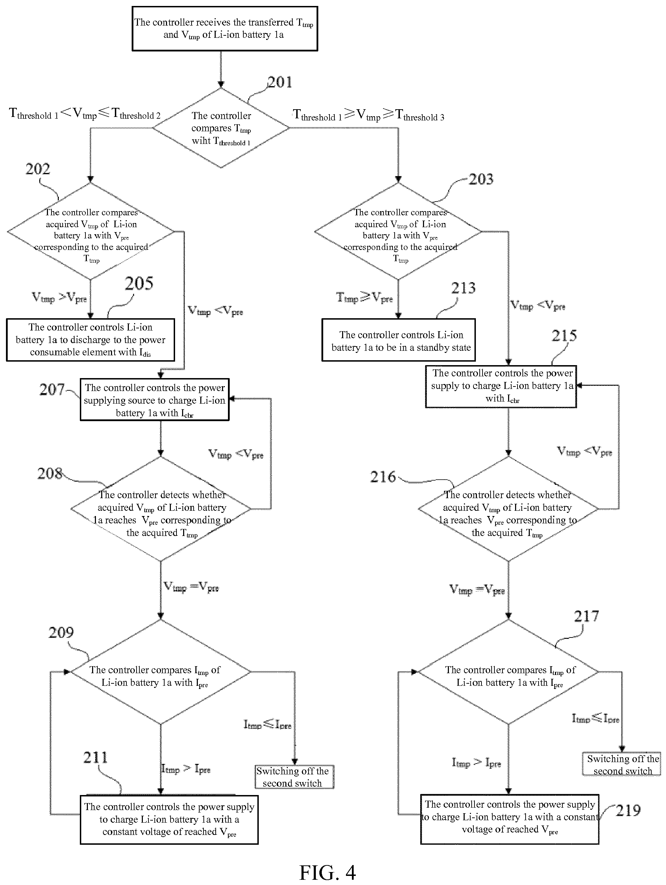

A third embodiment of the present application provides a method for controlling the battery, as shown in FIG. 4, taking the control of the Li-ion battery 1a with the battery controlling apparatus as an example, i.e. taking the control of the Li-ion battery 1a with the battery controlling apparatus provided by the present application as an example, the technical solution of the present application will be described in further detail, in which the battery controlling apparatus includes: a temperature sensor, a voltage sensor and a controller, and further includes a power consumable element and a current sensor.

In the above-mentioned third embodiment, the method for controlling the battery includes the following steps.

It should be noted that, the abbreviated expressions of the parameters are as follows: present temperature ($T_{tmp}$); voltage ($V_{tmp}$); current ($I_{tmp}$); first preset temperature ($T_{threshold\ 1}$); second preset temperature ($T_{threshold\ 2}$); third preset temperature ($T_{threshold\ 3}$); preset cut-off voltage ($V_{pre}$); preset charging current ($I_{chr}$); preset discharging current ($I_{dis}$); preset cut-off current ($I_{pre}$).

200: the controller receives a present temperature of the Li-ion battery 1a transferred by the temperature sensor and a voltage of the Li-ion battery 1a transferred by the voltage sensor; when the temperature sensor includes a thermistor and a sensor used for sensing the temperature of the thermistor, the controller receives the present temperature of the Li-ion battery 1a obtained through sensing the thermistor by the sensor.

201: the controller compares the acquired present temperature with the first preset temperature; if the acquired present temperature of the Li-ion battery 1a is greater than the first preset temperature and less than or equal to the second preset temperature, performing step 202; if the acquired present temperature of the Li-ion battery 1a is greater than or equal to the third preset temperature and less than or equal to the first preset temperature, performing step 203;

202: the controller compares the acquired voltage of the Li-ion battery 1a with the preset cut-off voltage corresponding to the acquired present temperature; if the acquired voltage of the Li-ion battery 1a is greater than the preset cut-off voltage corresponding to the present temperature, performing step 205; if the acquired voltage of the Li-ion battery 1a is less than the preset cut-off voltage corresponding to the present temperature, performing step 207;

203: the controller compares the acquired voltage of the Li-ion battery 1a with the preset cut-off voltage corresponding to the acquired present temperature; if the acquired voltage is greater than or equal to the preset cut-off voltage corresponding to the present temperature of the Li-ion battery 1a, performing step 213; if the acquired voltage is less than the preset cut-off voltage corresponding to the present temperature of the Li-ion battery 1a, performing step 215;

205: the controller controls the Li-ion battery 1a to discharge to the power consumable element with a preset discharging current; specifically, when the Li-ion battery 1a discharges, the second switch is switched off and the first switch is switched on; preferably, the Li-ion battery 1a discharges until the voltage of the Li-ion battery 1a reaches the preset cut-off voltage corresponding to the acquired present temperature, and at this time the first switch is switched off;

207: the controller controls the power supply to charge the Li-ion battery 1a with a preset charging current; specifically, when the Li-ion battery 1a is charged, the second switch is switched on and the first switch is switched off; preferably, the Li-ion battery 1a is charged until the voltage reaches the preset cut-off voltage corresponding to the acquired present temperature, i.e., performing step 208 after the Li-ion battery 1a is charged, during which the controller detects whether the voltage of the Li-ion battery 1a reaches the preset cut-off voltage corresponding to the present temperature; if the corresponding preset cut-off voltage is reached, performing step 209, if the voltage of the Li-ion battery 1a is still less than the preset cut-off voltage corresponding to the present temperature, the controller controls the power supply to continue charging the Li-ion battery 1a with the preset charging current until the voltage of the Li-ion battery 1a reaches the preset cut-off voltage corresponding to the present temperature.

209: the controller compares the current of the Li-ion battery 1a with the preset cut-off current; if the current of the Li-ion battery 1a is greater than the preset cut-off current, performing step 211; if the current of the Li-ion battery 1a is less than or equal to the preset cut-off current, the controller controls the power supply to stop charging the Li-ion battery 1a, i.e., switching off the second switch;

211: the controller controls the power supply to charge the Li-ion battery 1a with a constant voltage of the reached preset cut-off voltage until the current of the Li-ion battery 1a is less than or equal to the preset cut-off current;

213: the controller controls the Li-ion battery 1a to be in a standby state; that is, switching off the first switch and the second switch, so that the Li-ion battery 1a is in a state waiting to be charged or discharge;

215: the controller controls the power supply to charge the Li-ion battery 1a with the preset charging current; when charging, switching on the second switch and switching off the first switch; preferably, the Li-ion battery 1a is charged until its voltage reaches the preset cut-off voltage corresponding to the acquired present temperature, i.e., performing step 216 after the Li-ion battery 1a is charged, during which the controller detects whether the voltage of the Li-ion battery 1a reaches the preset cut-off voltage corresponding to the present temperature; if the corresponding preset cut-off voltage is reached, performing step 217; if the voltage of the Li-ion battery 1a is still less than the preset cut-off voltage corresponding to the present temperature, the controller controls the power supply to continue charging the Li-ion battery 1a with the preset charging current until the voltage of the Li-ion battery 1a reaches the preset cut-off voltage corresponding to the present temperature;

217: the controller compares the current of the Li-ion battery 1a with the preset cut-off current; if the current of the Li-ion battery 1a is greater than the preset cut-off current, performing step 219; if the current of the Li-ion battery 1a is less than or equal to the preset cut-off current, the controller controls the power supply to stop charging the Li-ion battery 1a, i.e., switching off the second switch;

219: the controller controls the power supply to charge the Li-ion battery 1a with a constant voltage of the reached preset cut-off voltage until the current of the Li-ion battery 1a is less than or equal to the preset cut-off current.

Besides, the method for controlling the Li-ion battery 1b with the battery controlling apparatus provided by the present application, the method for controlling the Li-ion battery 1c with the battery controlling apparatus provided by the present application, the method for controlling the Li-ion battery 1d with the battery controlling apparatus provided by the present application, the method for controlling the Li-ion battery 1e with the battery controlling apparatus provided by the present application and the method for controlling the Li-ion battery If with the battery controlling apparatus provided by the present application are the same as the method for controlling the Li-ion battery 1a with the battery controlling apparatus provided by the present application, which will not be repeated herein.

The beneficial technical effect of the Li-ion battery with the battery controlling apparatus provided by the present application is further illustrated by the following test examples.

**Test examples**

The Li-ion battery 1b, the Li-ion battery 1c, the Li-ion battery 1d, the Li-ion battery 1e and the Li-ion battery If all have the same battery controlling apparatus as the Li-ion battery 1a; in the Li-ion battery 1a, the Li-ion battery 1b, the Li-ion battery 1c, the Li-ion battery 1d, the Li-ion battery 1e and the Li-ion battery If, except that the selected positive electrode active material system and negative electrode active material system are different, the rest is the same. The above-mentioned Li-ion battery 1a, Li-ion battery 1b, Li-ion battery 1c, Li-ion battery 1d, Li-ion battery 1e and Li-ion battery 1f with the same battery controlling apparatus are respectively recorded as Battery 1a, Battery 1b, Battery 1c, Battery 1d, Battery 1e and Battery 1f.

Additionally, the Li-ion battery 1a, Li-ion battery 1b, Li-ion battery 1c, Li-ion battery 1d, Li-ion battery 1e and Li-ion battery 1f which do not have any battery controlling apparatus are respectively recorded as Battery 1a#, Battery 1b#, Battery 1c#, Battery 1c#, Battery 1e# and Battery 1f#.

The following tests are carried out for the above-mentioned Battery 1a, Battery 1b, Battery 1c, Battery 1d, Battery 1e, Battery If, Battery 1a#, Battery 1b#, Battery 1c#, Battery 1d#, Battery 1e# and Battery 1f# :

**(1) 45°C cycle test**

At 45°C, charging the battery to 4.40V with 0.5C current, then charging the battery to 0.05C current with a constant voltage, and then discharging to 3.0V with 0.5C constant current, repeating charging/discharging behaviors of the battery as such; respectively calculating the capacity retaining rate of the battery after 50 cycles, 100 cycles, 300 cycles and 500 cycles by the following formula; 5 parallel batteries are tested for each group, and the average value is calculated. Relevant data is shown in Table 1.

Capacity retaining rate of the battery after N cycles (%) = (discharge capacity of the Nth cycle)/ (discharge capacity of the first cycle) $\times$ 100%.

**(2) safety performance test against thermal shock**

At 25°C, charging the battery to 4.4V with 0.5C rate constant current, then charging the battery to 0.05C with 4.4V constant voltage, and then placing the battery in a thermostat, heating the thermostat to 150°C with a heating rate of 5°C/min, recording the time needed for heating the thermostat from 25°C to 150°C as $h_1$, and then baking the battery at 150°C until smoke and fire occur to the cell, recording the time needed from 25°C to the time when the smoke and fire occurs as $h_2$; the safety performance of the battery against thermal shock is characterized by the time that the battery bares the baking at 150°C, i.e., the time for bearing the baking is h=$h_2$-$h_1$, 5 parallel batteries are tested for each group, and the average value is calculated. Relevant data is shown in Table 1.

**(3) 85°C storage test**

At 25°C, charging the battery (5 batteries for each group) to 4.40V with 0.5C constant current, then charging the battery to 0.05C with a constant voltage, measuring the thickness of the Li-ion battery and recording the thickness as $h_0$; and then placing the Li-ion battery in a thermostat at 85°C and holding the temperature for 48h, measuring the thickness of the Li-ion battery every 12h and recording the thickness as $h_n$, n is storage time at a high temperature; the thickness expansion ratio of the battery is respectively calculated by the following formula, 5 parallel batteries are tested for each group, and the average value is calculated. Relevant data is shown in Table 2.

$$\text{Thickness expansion ratio (\%)} = (h_n\text{-}h_0)/h_0 \times 100\%.$$

**(4) 25°C charge performance test**

At 25°C, charging the battery to 4.4V with 1C constant current, then charging the battery to 0.05C with 4.4V constant voltage, standby for 10min, discharging to the cut-off voltage of 3.0V with 0.5C constant current; repeating for 10 cycles, then charging the battery to 4.4V with 1C constant current, disassembling the battery, observing whether lithium is precipitated on the anode interface of the battery; 5 parallel batteries are tested for each group, and the observation result is assessed. Relevant data is shown in Table 3.

**(5) 0°C charge performance test**

At 0°C, charging the battery to 4.4V with 0.5C constant current, then charging the battery to 0.05C with 4.4V constant voltage, standby for 10 min, discharging to a cut-off voltage of 3.0V with 0.5C constant current, repeating for 10 cycles, then charging the battery to 4.4V with 0.5C constant current, disassembling the battery, observing whether lithium is precipitated on the anode interface of the battery; 5 parallel batteries are tested for each group, and the observation result is assessed. Relevant data is shown in Table 3.

**Table 1**

| Battery No. | Capacity retaining rate after n cycles at 45 °C (%) | | | | Baking bearing time |
| --- | --- | --- | --- | --- | --- |
| | 50 | 100 | 300 | 500 | min |
| Battery 1a | 98.2 | 97.8 | 94.3 | 85.4 | 84 |
| Battery 1b | 97.8 | 96.6 | 93.7 | 81.2 | 74 |
| Battery 1c | 95.2 | 91.1 | 84.4 | 71.5 | 72 |
| Battery 1d | 98.3 | 97.4 | 94.2 | 83.5 | 78 |

(continued)

| Battery No. | Capacity retaining rate after n cycles at 45 °C (%) | | | | Baking bearing time |
|---|---|---|---|---|---|
| | 50 | 100 | 300 | 500 | min |
| Battery 1e | 96.4 | 92.1 | 87.3 | 78.6 | 79 |
| Battery If | 98.2 | 97.5 | 93.4 | 84.7 | 83 |
| Battery 1a[#] | 97.5 | 96.2 | 89.4 | 76.3 | 31 |
| Battery 1b[#] | 95.2 | 93.1 | 88.5 | 72.1 | 28 |
| Battery 1c[#] | 93.6 | 86.5 | 81.4 | 64.3 | 21 |
| Battery 1d[#] | 97.3 | 96.7 | 87.9 | 74.3 | 34 |
| Battery 1e[#] | 97.8 | 95.9 | 80.6 | 64.5 | 29 |
| Battery 1f[#] | 97.6 | 91.4 | 88.4 | 76.4 | 32 |

**Table 2**

| Battery No. | Thickness expansion rate after storing for nh at 85 °C (%) | | | |
|---|---|---|---|---|
| | 12h | 24h | 36h | 48h |
| Battery 1a | 5.6 | 6.7 | 7.4 | 8.7 |
| Battery 1b | 4.7 | 5.9 | 7.3 | 9.6 |
| Battery 1c | 7.8 | 10.4 | 15.5 | 21.3 |
| Battery 1d | 5.1 | 6.6 | 8.9 | 10.7 |
| Battery 1e | 6.5 | 8.3 | 14.6 | 20.3 |
| Battery 1f | 6.9 | 9.4 | 15.3 | 19.6 |
| Battery 1a[#] | 10.4 | 15.7 | 24.8 | 40.3 |
| Battery 1b[#] | 8.5 | 13.5 | 20.4 | 35.6 |
| Battery 1c[#] | 9.4 | 14.3 | 22.5 | 36.2 |
| Battery 1d[#] | 10.6 | 15.6 | 25.7 | 37.8 |
| Battery 1e[#] | 20.4 | 30.5 | 45.7 | 67.3 |
| Battery 1f[#] | 24.5 | 34.2 | 47.3 | 65.2 |

**Table 3**

| Battery No. | Lithium precipitation situation | |
|---|---|---|
| | 25°C | 0°C |
| Battery 1a | No lithium precipitation | No lithium precipitation |
| Battery 1b | No lithium precipitation | No lithium precipitation |
| Battery 1c | Slight lithium precipitation, lithium precipitation area is 1% of the total area of the anode of the battery | Slight lithium precipitation, lithium precipitation area is 2% of the total area of the anode of the battery |
| Battery 1d | No lithium precipitation | No lithium precipitation |

(continued)

| Battery No. | Lithium precipitation situation | |
| --- | --- | --- |
| | 25°C | 0°C |
| Battery 1e | No lithium precipitation | No lithium precipitation |
| Battery 1f | No lithium precipitation | No lithium precipitation |
| Battery 1a# | Heavy lithium precipitation, lithium precipitation area is 55% of the total area of the anode of the battery | Heavy lithium precipitation, lithium precipitation area is 62% of the total area of the anode of the battery |
| Battery 1b# | Heavy lithium precipitation, lithium precipitation area is 52% of the total area of the anode of the battery | Heavy lithium precipitation, lithium precipitation area is 68% of the total area of the anode of the battery |
| Battery 1c# | Heavy lithium precipitation, lithium precipitation area is 50% of the total area of the anode of the battery | Heavy lithium precipitation, lithium precipitation area is 65% of the total area of the anode of the battery |
| Battery 1d# | Heavy lithium precipitation, lithium precipitation area is 55% of the total area of the anode of the battery | Heavy lithium precipitation, lithium precipitation area is 67% of the total area of the anode of the battery |
| Battery 1e# | Heavy lithium precipitation, lithium precipitation area is 53% of the total area of the anode of the battery | Heavy lithium precipitation, lithium precipitation area is 65% of the total area of the anode of the battery |
| Battery 1f# | Heavy lithium precipitation, lithium precipitation area is 60% of the total area of the anode of the battery | Heavy lithium precipitation, lithium precipitation area is 72% of the total area of the anode of the battery |

It can be known from the relevant data of Table 1, Table 2 and Table 3 that, the Li-ion batteries with the battery controlling apparatus provided by the present application, compared with the conventional Li-ion batteries, have good high-temperature performances, i.e., excellent high-temperature cycle performance, high-temperature storage performance and safety performance at high temperature.

Additionally, it can also be known that: the Li-ion batteries with the battery controlling apparatus provided by the present application, compared with the conventional Li-ion batteries, are not readily to precipitate lithium at room temperature or low temperature, therefore possessing good charge performance.

According to the abovementioned disclosure, the person skilled in the art can make appropriate alternations and modifications to the above-mentioned embodiments. Therefore, the present application is not limited to the embodiments disclosed and described above, the modifications and alternations to the present application shall also fall into the protection scope of the present application.

**Claims**

1. A battery controlling apparatus, **characterized in that**, comprising a temperature sensor, a voltage sensor and a controller, the voltage sensor is connected with the battery, an output end of the voltage sensor is connected with the controller, an input end of the temperature sensor is connected with the battery and an output end of the temperature sensor is connected with the controller;
the voltage sensor is configured to transfer an acquired voltage of the battery to the controller, the temperature sensor is configured to transfer an acquired present temperature of the battery to the controller, the controller is configured to control the battery to be in a charging state or a discharging state according to the acquired present temperature of the battery and a relationship between a preset cut-off voltage corresponding to the present temperature of the battery and the voltage of the battery.

2. The battery controlling apparatus according to claim 1, **characterized in that**, the temperature sensor comprises a thermistor and a sensor configured for sensing a temperature of the thermistor, wherein, the thermistor is attached onto the battery and is connected with an input end of the sensor, an output end of the sensor is connected with the controller.

3. The battery controlling apparatus according to claim 1, **characterized in that**, further comprising a power consumable element, the power consumable element is connected with the battery through the controller, if the acquired present temperature of the battery is greater than a first preset temperature and the acquired voltage of the battery is greater than the preset cut-off voltage corresponding to the present temperature of the battery, the power consumable element consumes electric energy of the battery under control of the controller,

the battery controlling apparatus further comprises a first switch, the first switch is arranged between the controller and the power consumable element, the first switch is switched on or switched off under control of the controller.

4. The battery controlling apparatus according to claim 1, **characterized in that**, further comprising a second switch, the second switch is arranged between the controller and a power supply, the second switch is switched on or switched off under control of the controller.

5. The battery controlling apparatus according to claim 1, **characterized in that**, further comprising a current sensor, the current sensor is connected with the battery, an output end of the current sensor is connected with the controller, the current sensor is configured to detect and acquire a current of the battery when the battery reaches the preset cut-off voltage corresponding to the present temperature in the charging state.

6. The battery controlling apparatus according to any one of claims 1~5, **characterized in that**, the controller comprises a storage module, an acquiring module, a comparing module and a high-temperature processing module;

the storage module is configured to store a corresponding relation between the temperature of the battery and the preset cut-off voltage, a preset charging current when the battery is being charged and a preset discharging current when the battery is discharging to the power consumable element;

the acquiring module is configured to acquire the present temperature of the battery transferred by the temperature sensor, and the voltage of the battery transferred by the voltage sensor;

the comparing module is configured to compare the present temperature of the battery with a first preset temperature, and to compare the preset cut-off voltage corresponding to the present temperature with the voltage of the battery;

the high-temperature processing module is configured to control the battery to discharge to the power consumable element if the present temperature of the battery is greater than the first preset temperature and the voltage of the battery is greater than the preset cut-off voltage corresponding to the present temperature;

if the present temperature of the battery is greater than the first preset temperature and the voltage of the battery is less than the preset cut-off voltage corresponding to the present temperature, the high-temperature processing module controls a power supply to charge the battery.

7. The battery controlling apparatus according to any one of claims 1~5, **characterized in that**, the controller comprises a storage module, an acquiring module, a comparing module and a low-temperature processing module;

the storage module is configured to store a corresponding relation between the temperature of the battery and the preset cut-off voltage, a preset charging current when the battery is being charged and a preset discharging current when the battery is discharging to the power consumable element;

the acquiring module is configured to acquire the present temperature of the battery transferred by the temperature sensor, and the voltage of the battery transferred by the voltage sensor;

the comparing module is configured to compare the present temperature of the battery with the first preset temperature, and to compare the preset cut-off voltage corresponding to the present temperature with the voltage of the battery;

the low-temperature processing module is configured to control the battery to be in a standby state if the present temperature of the battery is less than or equal to the first preset temperature and the voltage of the battery is greater than or equal to the preset cut-off voltage corresponding to the present temperature;

if the present temperature of the battery is less than or equal to the first preset temperature and the voltage of the battery is less than the preset cut-off voltage corresponding to the present temperature, the low-temperature processing module controls the power supply to charge the battery.

8. The battery controlling apparatus according to claim 5, **characterized in that**, the controller further comprises a constant-voltage processing module;

the constant-voltage processing module is configured to detect and acquire the current of the battery and determine whether it is needed to continue charging the battery or not when the battery is charged to the preset cut-off voltage corresponding to the present temperature;

if the current of the battery is greater than preset cut-off current, the constant-voltage processing module is configured to control the power supply to charge the battery with a constant voltage;

if the current of the battery is less than or equal to the preset cut-off current, the constant-voltage processing module is configured to control the power supply to stop charging the battery.

9. A method for controlling a battery, **characterized in that**, the battery comprises a temperature sensor, a voltage sensor and a controller, the voltage sensor is connected with the battery, an output end of the voltage sensor is connected with the controller, an input end of the temperature sensor is connected with the battery and an output end of the temperature sensor is connected with the controller;

the method comprises:

receiving, by the controller, a voltage of the battery transferred by the voltage sensor and a present temperature of the battery transferred by the temperature sensor;

controlling, by the controller, the battery to be in a charging state, a discharging state or a standby state according to an acquired present temperature of the battery and a relation between a preset cut-off voltage corresponding to the present temperature of the battery and an acquired voltage of the battery;

the temperature sensor comprises a thermistor and a sensor configured for sensing a temperature of the thermistor, wherein, the thermistor is attached onto the battery and is connected with an input end of the sensor, an output end of the sensor is connected with the controller;

the receiving, by the controller, the present temperature of the battery transferred by the temperature sensor, comprises: receiving, by the controller, the present temperature of the battery obtained through sensing the thermistor by the sensor.

10. The method according to claim 9, **characterized in that**, the battery further comprises a power consumable element, the power consumable element is connected with the battery through the controller;

the method further comprises:

controlling, by the controller, the battery to discharge to the power consumable element until the battery reaches the preset cut-off voltage corresponding to the present temperature if the present temperature of the battery is greater than a first preset temperature and the voltage of the battery is greater than the preset cut-off voltage corresponding to the present temperature;

controlling, by the controller, a power supply to charge the battery if the present temperature of the battery is greater than the first preset temperature and the voltage of the battery is less than the preset cut-off voltage corresponding to the present temperature;

controlling, by the controller, the battery to be in a standby state if the present temperature of the battery is less than or equal to the first preset temperature and the voltage of the battery is greater than the preset cut-off voltage corresponding to the present temperature;

controlling, by the controller, the power supply to charge the battery if the present temperature of the battery is less than or equal to the first preset temperature and the voltage of the battery is less than the preset cut-off voltage corresponding to the present temperature, and/or

the battery further comprises a current sensor, the current sensor is connected with the battery, and an output end of the current sensor is connected with the controller;

the method further comprises:

detecting and acquiring, by the current sensor, a current of the battery when the battery is charged to the preset cut-off voltage corresponding to the present temperature;

controlling, by the controller, the power supply to charge the battery with a constant voltage if the current of the battery is greater than a preset cut-off current;

controlling, by the controller, the power supply to stop charging the battery if the current of the battery is less than or equal to the preset cut-off current, so as to make the battery be in a standby state.

FIG. 1

FIG. 2

**EP 3 196 971 A1**

The controller receives a voltage of the battery transferred by the voltage sensor and a present temperature of the battery transferred by the temperature sensor — 101

The controller controls the battery to be in a charging state, a discharging state or a standby state according to the present temperature of the battery and a relationship between a preset cut-off voltage corresponding to the present temperature of the battery and the acquired voltage of the battery — 102

FIG. 3

The controller receives the transferred $T_{tmp}$ and $V_{tmp}$ of Li-ion battery 1a

201

$T_{threshold\ 1} < V_{tmp} \leqslant T_{threshold\ 2}$

The controller compares $T_{tmp}$ wiht $T_{threshold\ 1}$

$T_{threshold\ 1} \geqslant V_{tmp} \geqslant T_{threshold\ 3}$

202

The controller compares acquired $V_{tmp}$ of Li-ion battery 1a with $V_{pre}$ corresponding to the acquired $T_{tmp}$

203

The controller compares acquired $V_{tmp}$ of Li-ion battery 1a with $V_{pre}$ corresponding to the acquired $T_{tmp}$

$V_{tmp} > V_{pre}$  205

$V_{tmp} < V_{pre}$

$T_{tmp} \geqslant V_{pre}$  213

$V_{tmp} < V_{pre}$

215

The controller controls Li-ion battery 1a to discharge to the power consumable element with $I_{dis}$

The controller controls Li-ion battery 1a to be in a standby state

The controller controls the power supply to charge Li-ion battery 1a with $I_{chr}$

207  The controller controls the power supplying source to charge Li-ion battery 1a with $I_{chr}$

$V_{tmp} < V_{pre}$

208  The controller detects whether acquired $V_{tmp}$ of Li-ion battery 1a reaches $V_{pre}$ corresponding to the acquired $T_{tmp}$

216  The controller detects whether acquired $V_{tmp}$ of Li-ion battery 1a reaches $V_{pre}$ corresponding to the acquired $T_{tmp}$

$V_{tmp} < V_{pre}$

$V_{tmp} = V_{pre}$

$V_{tmp} = V_{pre}$

209  The controller compares $I_{tmp}$ of Li-ion battery 1a with $I_{pre}$

$I_{tmp} \leqslant I_{pre}$

217  The controller compares $I_{tmp}$ of Li-ion battery 1a with $I_{pre}$

$I_{tmp} \leqslant I_{pre}$

211  $I_{tmp} > I_{pre}$

Switching off the second switch

The controller controls the power supply to charge Li-ion battery 1a with a constant voltage of reached $V_{pre}$

$I_{tmp} > I_{pre}$

Switching off the second switch

The controller controls the power supply to charge Li-ion battery 1a with a constant voltage of reached $V_{pre}$  219

FIG. 4

FIG. 5

FIG. 6

FIG. 7

FIG. 8

FIG. 9

FIG. 10

Europäisches
Patentamt

European
Patent Office

Office européen
des brevets

# EUROPEAN SEARCH REPORT

Application Number

EP 17 15 1855

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/312391 A1 (BENISE KIMITAKA [JP]) 22 December 2011 (2011-12-22) | 1-5,9 | INV. H01M10/44 H01M10/48 |
| Y | * paragraphs [0074], [0095]; claim 1; figures 1,2 *<br>* paragraph [0119] - paragraph [0121] * | 6,8,10 | ADD. H01M10/052 H01M10/0525 |
| X | EP 2 328 224 A1 (SAMSUNG SDI CO LTD [KR]) 1 June 2011 (2011-06-01) | 1-5,9 | |
| Y | * paragraphs [0041], [0043]; figures 1,2a *<br>* paragraph [0085]; figures 4,5 * | 7,8,10 | |
| Y | EP 2 244 350 A2 (PANASONIC ELECTRIC WORKS POWER [JP]) 27 October 2010 (2010-10-27) * paragraph [0030] - paragraph [0032]; figure 4 * | 6-8,10 | |

TECHNICAL FIELDS
SEARCHED      (IPC)

H01M

The present search report has been drawn up for all claims

| Place of search | Date of completion of the search | Examiner |
|---|---|---|
| Munich | 19 April 2017 | Hintermaier, Frank |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 15 1855

This annex lists the patent family members relating to the patent documents cited in the above-mentioned European search report.
The members are as contained in the European Patent Office EDP file on
The European Patent Office is in no way liable for these particulars which are merely given for the purpose of information.

19-04-2017

| Patent document cited in search report | | Publication date | Patent family member(s) | | Publication date |
|---|---|---|---|---|---|
| US 2011312391 | A1 | 22-12-2011 | NONE | | |
| EP 2328224 | A1 | 01-06-2011 | CN | 102082310 A | 01-06-2011 |
| | | | EP | 2328224 A1 | 01-06-2011 |
| | | | JP | 2011115040 A | 09-06-2011 |
| | | | KR | 20110058378 A | 01-06-2011 |
| | | | US | 2011121787 A1 | 26-05-2011 |
| EP 2244350 | A2 | 27-10-2010 | CN | 101872988 A | 27-10-2010 |
| | | | EP | 2244350 A2 | 27-10-2010 |
| | | | JP | 5390925 B2 | 15-01-2014 |
| | | | JP | 2010259234 A | 11-11-2010 |
| | | | US | 2010270973 A1 | 28-10-2010 |

EPO FORM P0459

For more details about this annex : see Official Journal of the European Patent Office, No. 12/82

## EP 3 196 971 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 312412014 A